# EUROPEAN PATENT APPLICATION

(11) **EP 4 564 196 A1**
(43) Date of publication of application: **04.06.2025**
(21) Application number: 22952496.2
(22) Date of filing: 29.07.2022
(51) Int. Cl.: G06F 18/00

(54) **TEXT CONVERSION METHOD AND APPARATUS, AND STORAGE MEDIUM AND INTERACTION DEVICE**

(71) Applicant: Guangzhou Shiyuan Electronic Technology Company Limited, Guangzhou, Guangdong 510530 (CN); Guangzhou Shiyuan Innovation Technology Co., Ltd, Guangzhou, Guangdong 510530 (CN)
(72) Inventor: WU, Shile, Guangzhou, Guangdong 510530 (CN)
(74) Representative: Grünecker Patent- und Rechtsanwälte PartG mbB
(86) International application number: PCT/CN2022/109061
(87) International publication number: WO 2024/021049

(57) **Abstract**

A text conversion method, apparatus, storage medium and interactive device is provided. The method includes: storing handwriting input by a user in a handwriting queue to be processed; reading first N handwriting in the handwriting queue to be processed at a preset time interval, where the N is a positive integer greater than or equal to 1; composing a handwriting sequence with the read first N handwriting; performing character recognition on the handwriting sequence to acquire a target text; and finally replacing the displayed first N handwriting with the target text for display, which realizes automatic recognition of the user handwriting during the user writing process and displaying the recognized text, without manually selecting the recognized text by the user during the process, thereby ensuring the writing continuity of the user.

## Description

The present disclosure claims the priority of Chinese patent application No. 2021108508248 filed on July 25, 2021, entitled with "GAME OFFLINE PROCESSING METHOD, APPARATUS, STORAGE MEDIUM AND ELECTRONIC DEVICE", which is incorporated herein by reference in its entirety.

### TECHNICAL FIELD

The present disclosure relates to the field of computer technology, and in particular to a text conversion method, apparatus, storage medium and interactive device.

### BACKGROUND

OCR refers to the process in which an interactive device (such as a scanner or digital camera) examines characters printed on paper, determines their shapes by detecting dark and light modes, and then translates the shapes into computer text by a character recognition method; that is, for printed characters, an optical manner is used to convert the text in a paper document into an image file of black and white dot matrix, and recognition software is used to convert the text in the image into a text format for further editing and processing by word processing software.

With the increasing popularity of information technology and computer technology, human society has entered the information age. A type of electronic whiteboard with OCR recognition function has gradually become popular in work and study. This type of electronic whiteboard may recognize handwriting of manually writing by a user and convert it into a standard format text for display.

### SUMMARY

The embodiments of the present disclosure provide a text conversion method, apparatus, storage medium and interactive device, which can automatically recognize the user handwriting and display the recognized text during the user writing process, without manually selecting the recognized text by the user during the process, thereby ensuring the writing continuity of the user. The technical solution is as follows.

According to a first aspect of an embodiment of the present disclosure, a text conversion method is provided, which is applied to an interactive device, and the method includes:
storing handwriting input by a user in a handwriting queue to be processed;
reading first N handwriting in the handwriting queue to be processed at a preset time interval, where the N is a positive integer greater than or equal to 1;
composing a handwriting sequence with the read first N handwriting;
performing character recognition on the handwriting sequence to acquire a target text; and
replacing the displayed first N handwriting with the target text for display.

According to a second aspect of an embodiment of the present disclosure an interactive device is provided, the interactive device includes a human-computer interaction component, a display module, a memory, and a processor, the processor is connected to the memory, the human-computer interaction component, and the display module, respectively, and the display module includes a display screen;
the human-computer interaction component is configured to collect handwriting input by the user on a display screen of the interactive device; the processor is configured to store the handwriting in a handwriting queue to be processed in the memory, read first N handwriting in the handwriting queue to be processed from the memory at a preset time interval, compose a handwriting sequence with the read first N handwriting, perform character recognition on the handwriting sequence to acquire a target text, and control the display module to replace the first N handwriting displayed on the display screen with the target text for display, where the N is a positive integer greater than or equal to 1.

According to a third aspect of an embodiment of the present disclosure, a computer storage medium is provided, on which a plurality of instructions is stored, where the instructions are suitable for being loaded by a processor and executing the above-mentioned method steps.

In one or more embodiments of the present disclosure, the handwriting input by the user is stored in a handwriting queue to be processed, and the first N handwriting in the handwriting queue to be processed are read at each preset time interval, where N is a positive integer greater than or equal to 1, a handwriting sequence are composed with the read first N handwriting, and then character recognition is performed on the handwriting sequence to acquire a target text, and finally, the first N handwriting displayed are replaced with the target text for display, which realizes automatic recognition of the user handwriting during the user writing process and displaying the recognized text, without manually selecting the recognized text by the user during the process, thereby ensuring the writing continuity of the user.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are only some embodiments of the present disclosure. For those in the art, other drawings may be obtained based on these drawings without paying any creative work.
Fig. 1 is a flowchart of a text conversion method according to an embodiment of the present disclosure.
Fig. 2 is a flowchart of a text conversion method according to an embodiment of the present disclosure.
Fig. 3 is a schematic diagram showing an example of calculating handwriting intervals according to embodiment of the present disclosure.
Fig. 4 is a schematic diagram showing an example of determining a handwriting height parameter value according to an embodiment of the present disclosure.
Fig. 5 is a flowchart of a text conversion method according to an embodiment of the present disclosure.
Fig. 6 is a schematic diagram showing an example of a first text according to an embodiment of the present disclosure.
Fig. 7 is a schematic diagram showing an example of a scaling process according to an embodiment of the present disclosure.
Fig. 8 is a schematic diagram showing an example of a target handwriting interval according to an embodiment of the present disclosure.
Fig. 9 is a schematic diagram showing an example of a scaling process according to an embodiment of the present disclosure.
Fig. 10 is a schematic diagram of a structure of an interactive device according to an embodiment of the present disclosure.
Fig. 11 is a block diagram of a structure of an electronic device according to an embodiment of the present disclosure.

### DESCRIPTION OF THE PREFERRED EMBODIMENTS

The following will provide a clear and complete description of the technical solution in the embodiments of the present disclosure, based on the accompanying drawings. Obviously, the described embodiments are only a part of the embodiments of the present disclosure, not all of them. Based on the embodiments in the present disclosure, all other embodiments obtained by those skilled in the art without creative labor are within the scope of protection of the present disclosure.

In the description of the present disclosure, it should be understood that the terms "first", "second", etc. are only used for descriptive purposes and may not be understood as indicating or implying relative importance. In the description of the present disclosure, it should be noted that unless otherwise specified and limited, the terms "including" and "having" and any variations thereof are intended to cover non-exclusive inclusions. For example, a process, a method, a system, a product, or a device that includes a series of steps or units is not limited to the listed steps or units, but may optionally include steps or units that are not listed, or may optionally include other steps or units that are inherent to these processes, methods, products, or devices. For those skilled in the art, the specific meanings of the above terms in the present disclosure may be understood in specific situations. In addition, in the description of the present disclosure, unless otherwise specified, "multiple" refers to two or more. "And/or" describes the association relationship between related objects, indicating that there may be three types of relationships, for example, A and/or B, which may represent: A exists alone, A and B exist simultaneously, and B exists alone. The character "/" generally indicates that the associated object before and after is an "or" relationship.

In the related art, in the process of performing OCR recognition and the handwriting replacement on the user handwriting, it is usually achieved in the following two manners:
a first manner, when a user finishes writing, the user manually selects handwriting that needs to be recognized and replaced, so as to realize OCR recognition and replacement on the handwriting.
a second manner, the recognition result is prompted in real time during the writing process of the user, and the handwriting may be replaced only after the user determines the recognition result.

However, both of the above manners require manual operation by the user, which will seriously interrupt the writing continuity of the user during the writing process.

Based on this, the present disclosure proposes a text conversion method, in which the handwriting input by the user is stored in a handwriting queue to be processed, and the first N handwriting in the handwriting queue to be processed are read at each preset time interval, where N is a positive integer greater than or equal to 1, a handwriting sequence are formed with the read first N handwriting, and then character recognition is performed on the handwriting sequence to acquire a target text, and finally, the first N handwriting displayed are replaced with the target text for display, which realizes automatic recognition of the user handwriting during the user writing process and displaying the recognized text, without manually selecting the recognized text by the user during the process, thereby ensuring the writing continuity of the user.

Hereinafter, the details will be described with reference to specific embodiments. The implementations described in the following exemplary embodiments do not represent all implementations consistent with the present disclosure. Rather, they are merely examples of apparatus and methods consistent with some aspects of the present disclosure as recited in the appended claims. The flowcharts shown in the drawings are only exemplary illustrations, and it is not necessary to execute the steps shown. For example, some steps are parallel and do not have a strict logical order, so the actual execution order is variable.

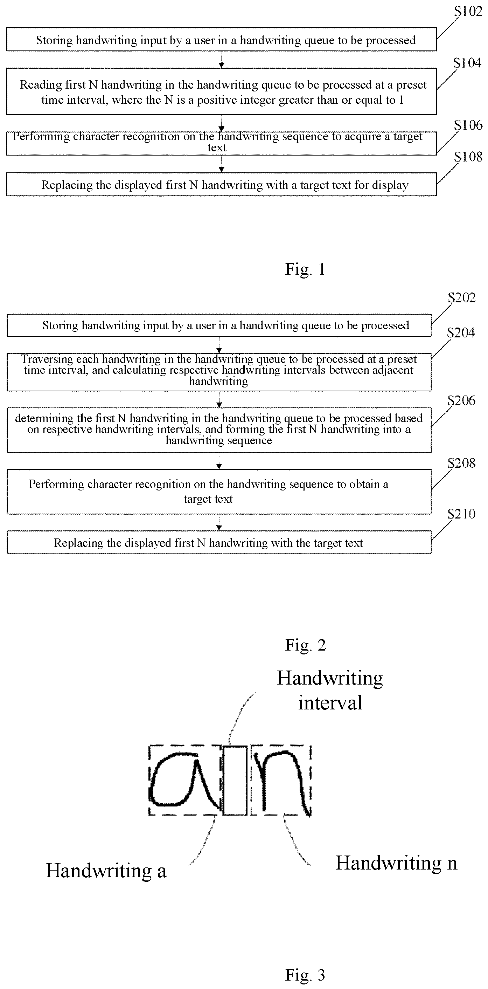

Referring to Fig. 1, Fig. 1 is a flowchart of a text conversion method according to an embodiment of the present disclosure. In a specific embodiment, the text conversion method may be applied to a text conversion apparatus or an interactive device equipped with a text conversion apparatus.

The specific process of this embodiment will be described below by taking the execution subject as an interactive device as an example. It should be noted that the text conversion method according to the embodiment of the present disclosure is mainly used in the whiteboard application of the interactive device, and the whiteboard application includes at least one text recognition mode. In the intelligent recognition mode of the whiteboard application, the interactive device will execute the text conversion method provided in the embodiment of the present disclosure.

Hereinafter, the process shown in Fig. 1 will be described in detail. The text conversion method may include the following steps:
S102, storing handwriting input by a user in a handwriting queue to be processed.

Additionally, a display screen is provided on the interactive device. When a user writes a text content on the display screen, the display screen recognizes the handwriting continuously input by the user on the display screen, displays the recognized handwriting on the display screen, and stores the handwriting displayed on the display screen into a pre-set handwriting queue to be processed.

The display screen may be a screen with a touch display function or a screen without a touch display function. If the display screen is a screen with a touch display function, when the user performs a writing operation on the display screen, the writing may be based on touch writing with a human hand or based on touch writing with a stylus pen. If the display screen is a screen without a touch function, when the user performs a writing operation on the display screen, the writing may be performed based on an external device such as a mouse or a touchpad.

In an embodiment, when the display screen is a screen with a touch display function, when the user performs a writing operation on the display screen based on touch with human hand, the display screen recognizes coordinates of a touch point touched by the human hand when the human hand touches it, and records a touch trajectory of the human hand based on the coordinates of the touch point touched by the human hand. The touch handwriting is handwriting written by the user on the display screen through touch with a human hand. The display screen will display the recognized handwriting on the screen, and at the same time send the recognized handwriting to a processor, so that the processor stores the handwriting to a predesigned handwriting queue to be processed.

The display screen may be a touch screen using vector pressure sensing technology, a touch screen using resistive technology, a touch screen using capacitive technology, a touch screen using infrared technology, a touch screen using surface acoustic wave technology, or the like.

Furthermore, the display screen stores the recognized handwriting into a pre-set handwriting queue to be processed, and each handwriting written by the user may be stored into the handwriting queue to be processed. A handwriting refers to a path that a user finger (or other touch devices such as a stylus) travels from the time the user finger (or other touch devices such as a stylus) touches the display screen to the time the user finger (or other touch devices such as a stylus) leaves the display screen.

For example, the path traversed by the user finger (or other touch devices such as a stylus) from the time the user finger (or other touch devices such as a stylus) touches the display screen to the time the user finger (or other touch devices such as a stylus) leaves the display screen is used as a first handwriting, which is displayed on the display screen and stored in a handwriting queue to be processed; the path traversed by the user finger (or other touch devices such as a stylus) touches the display screen again until the user finger (or other touch devices such as a stylus) leaves the display screen is used as a second handwriting, which is displayed on the display screen and stored in a handwriting queue to be processed; and each handwriting written by the user is stored in the handwriting queue to be processed in sequence along with the user writing action.

In an embodiment, when the display screen is a screen without a touch function, when the user performs a writing operation on the display screen using a mouse, a mouse cursor is displayed on the display screen, and the user may control the selection and movement of the mouse cursor by operating the mouse. When the mouse cursor is selected, the mouse will record coordinates of the mouse cursor, and along with the movement of the mouse cursor, a coordinate set of all coordinates on the cursor movement trajectory is recorded. The coordinate set represents the movement trajectories of the mouse cursor, and the movement trajectory is the user handwriting. The mouse sends the handwriting to the processor, and the processor stores the handwriting to a pre-set handwriting queue to be processed. At the same time, the processor controls the handwriting to be displayed on the display screen.

S104, reading first N handwriting in the handwriting queue to be processed at a preset time interval, where the N is a positive integer greater than or equal to 1.

Additionally, after the user performs a writing operation on the display screen of the interactive device and the first handwriting written by the user is stored in the handwriting queue to be processed, the interactive device reads a handwriting sequence consisting of the first N handwriting in the handwriting queue to be processed at a preset time interval.

The handwriting sequence consisting of the first N handwriting refers to all handwriting that form a word or a character. It may be understood that during the writing process of the user, a word/text requires multiple handwriting to be composed. For example, when the user writes "us" on the display screen of the interactive device, the interactive device will receive a total of three handwriting written by the user, including two handwriting of "u" and one handwriting of "s", and these three handwriting are regarded as a handwriting sequence.

In an embodiment, during the user's writing process, the interactive device recognizes all the writings in the handwriting queue to be processed at a preset time interval, calculates the handwriting intervals between adjacent writings, and determines a handwriting sequence consisting of the first N writings in the handwriting queue to be processed based on the handwriting intervals between adjacent writings.

During the user writing process, according to the user writing habits, the interval between adjacent letters in a word is smaller than the interval between words, that is, after the user finishes writing a word, when starting to write the next word, the handwriting interval reserved between the last letter of the previous word and the first letter of the next word is larger. According to this feature, the handwriting sequence consisting of the first N handwriting may be determined by calculating the handwriting intervals between adjacent handwriting.

In an embodiment, after calculating the handwriting intervals between adjacent handwriting in the queue to be processed, the handwriting interval among handwriting intervals being greater than a preset threshold is used as a target handwriting interval, and the handwriting before the target handwriting interval are used as a handwriting sequence consisting of the first N handwriting. For example, when the user is writing "thank you", when the user writes "thank y", the interactive device detects that the handwriting interval between "k" and "y" is greater than a preset threshold, the "thank" before the handwriting interval is used as the handwriting sequence consisting of the first N handwriting.

Optionally, the preset threshold may be one-third of the height of the user handwriting.

Optionally, if the target handwriting interval is not recognized in the handwriting queue to be processed, the handwriting sequence consisting of the first N handwriting may not be determined, and the steps of traversing each handwriting in the handwriting queue to be processed at each preset interval and calculating respective handwriting intervals between adjacent handwriting are executed.

In an embodiment, after calculating the handwriting intervals between adjacent handwriting in the handwriting queue to be processed, the method includes: obtaining a height parameter value of each handwriting in the handwriting queue to be processed, taking the handwriting interval among respective handwriting intervals that is greater than one-third of the height parameter value as the target handwriting interval, and taking the handwriting before the target handwriting interval as the handwriting sequence consisting of the first N handwriting.

Optionally, the obtaining a height parameter value of each handwriting in the handwriting queue to be processed may be: determining a minimum bounding rectangle of all handwriting in the handwriting queue to be processed, and using the height of the minimum bounding rectangle as the height parameter value of the handwriting in the handwriting queue to be processed.

Optionally, the obtaining a height parameter value of each handwriting in the handwriting queue to be processed may also be: determining a minimum bounding rectangle of all handwriting in the handwriting queue to be processed, performing character recognition on all handwriting in the handwriting queue to be processed, acquiring a first recognized text of a preset text size, performing scaling process on the first text based on the first text of the preset text size and the minimum bounding rectangle to acquire a second text, where the width of the second text is smaller than that of the minimum bounding rectangle, and the height of the second text is smaller than that of the minimum bounding rectangle, and using the height of the second text as the height parameter value of the handwriting in the handwriting queue to be processed.

S106, performing character recognition on the handwriting sequence to acquire a target text.

Additionally, after reading the handwriting sequence consisting of the first N handwriting, OCR character recognition is performed on all handwriting in the handwriting sequence to acquire the target text corresponding to the first N handwriting, and the handwriting queue consisting of the first N handwriting in the handwriting queue to be processed is deleted.

In an embodiment, after reading a handwriting sequence consisting of the first N handwriting, OCR character recognition is performed on all handwriting in the handwriting sequence to obtain a target text corresponding to the first N handwriting. This may be done by first performing character recognition on the handwriting sequence to acquire a second recognized text of a preset text size, and determining a second minimum bounding rectangle of the handwriting sequence, and then, performing scaling process on the second recognized text to acquire the target text corresponding to the first N handwriting based on the second recognized text of the preset text size and the second minimum bounding rectangle.

Optionally, the performing scaling process on the second recognized text to acquire the target text corresponding to the first N handwriting based on the second recognized text of the preset text size and the second minimum bounding rectangle may be: calculating a second scaling factor based on the second minimum bounding rectangle of all writings in the handwriting sequence on the display screen and the second recognized text with a preset text size; if a ratio of the width of the recognized text to the height of the recognized text is greater than or equal to the ratio of the width of the second minimum bounding rectangle to the height of the second minimum bounding rectangle, then using the ratio of the width of the recognized text to the width of the second minimum bounding rectangle as a second scaling factor; if the ratio of the width of the recognized text to the height of the recognized text is less than the ratio of the width of the second minimum bounding rectangle to the height of the second minimum bounding rectangle, then using the ratio of the height of the recognized text to the height of the second minimum bounding rectangle as the second scaling factor; then, performing scaling process on the second recognized text based on the second scaling factor to acquire the target text.

The width of recognized text is a width value of the second recognized text of the preset text size, and the height of the recognized text is a height value of the second recognized text of the preset text size.

S108, replacing the displayed first N handwriting with the target text for display.

Additionally, during the writing process of the user, the user handwriting will be synchronously displayed on the display screen. After the first N handwriting are recognized to acquire the target text, the first N handwriting displayed on the display screen are replaced with the target text.

In an embodiment, the replacing the displayed first N handwriting with the target text for display may be: erasing the first N handwriting displayed on the display screen and displaying the target text at an upper left corner of the second minimum bounding rectangle on the display screen.

In an embodiment, after replacing the first N handwriting displayed on the display screen with the target text, the first N handwriting in the queue to be processed are deleted before the handwriting sequence consisting of the first N handwriting in the queue to be processed is read again after a preset time interval.

It may be understood that after the handwriting sequence is recognized to acquire the target text, there is no need to continue to retain the first N handwriting corresponding to the handwriting sequence in the queue to be processed, so the first N handwriting are deleted from the queue to be processed to save storage space.

In an embodiment of the present disclosure, the handwriting input by the user is stored in a handwriting queue to be processed, and the first N handwriting in the handwriting queue to be processed are read at each preset time interval, where N is a positive integer greater than or equal to 1, a handwriting sequence are composed with the read first N handwriting, and then character recognition is performed on the handwriting sequence to acquire a target text, and finally, the first N handwriting displayed are replaced with the target text for display, which realizes automatic recognition of the user handwriting during the user writing process and displaying the recognized text, without manually selecting the recognized text by the user during the process, thereby ensuring the writing continuity of the user.

Referring to Fig. 2, Fig. 2 is a flowchart of a text conversion method according to an embodiment of the present disclosure. As shown in Fig. 2, the text conversion method may include the following steps.

S202, storing handwriting input by a user in a handwriting queue to be processed.

Additionally, for step S202, reference is made to the detailed description of step S 102 in another embodiment, which will not be repeated here.

S204, traversing each handwriting in the handwriting queue to be processed at a preset time interval, and calculating respective handwriting intervals between adjacent handwriting.

Additionally, during the writing process of the user, the interactive device traverses each handwriting stored in the handwriting queue to be processed at a preset time interval, and calculates the handwriting interval between adjacent handwriting.

Optionally, the calculating the handwriting intervals between adjacent handwriting may be: making minimum bounding rectangles of two adjacent handwriting respectively, and using the interval between the two minimum bounding rectangles as the handwriting interval between adjacent handwriting.

Referring to Fig. 3, Fig. 3 is a schematic diagram showing an example of calculating handwriting intervals according to an embodiment of the present disclosure. As shown in Fig. 3, the handwriting written by the user on the display screen includes "handwriting a" and "handwriting n". The minimum bounding rectangles of "handwriting a" and "handwriting n" are respectively made, and the interval between the minimum bounding rectangles is the handwriting interval between "handwriting a" and "handwriting n".

S206, determining the first N handwriting in the handwriting queue to be processed based on respective handwriting intervals, and forming the first N handwriting into a handwriting sequence.

Additionally, based on the writing characteristic that the interval between adjacent letters in a word is smaller than the interval between words, the handwriting sequence consisting of the first N handwriting is determined by calculating the handwriting intervals of each adjacent handwriting. The first N handwriting are all handwriting contained in the user writing of a complete word.

Optionally, after calculating the handwriting interval between adjacent handwriting in the handwriting queue to be processed, the handwriting interval being greater than a preset threshold is used as the target handwriting interval, and the handwriting before the target handwriting interval is used as the handwriting sequence consisting of the first N handwriting. For example, when a user is writing "thank you", when the user writes "thank y", the interactive device detects that the handwriting interval between "k" and "y" is greater than a preset threshold, then the "thank" before the handwriting interval is used as a handwriting sequence consisting of the first N handwriting.

The preset threshold is an interval threshold set according to the user writing habits, and is used to recognize whether the handwriting interval is the handwriting interval between letters in the same word or the handwriting interval between different words. The handwriting interval being greater than the preset threshold is used as the target handwriting interval between words.

Optionally, based on the user writing habits, the target handwriting interval is set to one-third of the handwriting height value. In an embodiment, after calculating the handwriting interval between each adjacent handwriting in the handwriting queue to be processed, the height parameter value of each handwriting in the handwriting queue to be processed is obtained, and the handwriting interval being greater than one-third of the height parameter value among handwriting intervals is used as the target handwriting interval, and the handwriting before the target handwriting interval is used as the handwriting sequence consisting of the first N handwriting.

Optionally, the obtaining a height parameter value of each handwriting in the handwriting queue to be processed may be: making a minimum bounding rectangle of all handwriting in the handwriting queue to be processed, and then using the height of the minimum bounding rectangle as the height parameter value of the handwriting in the handwriting queue to be processed.

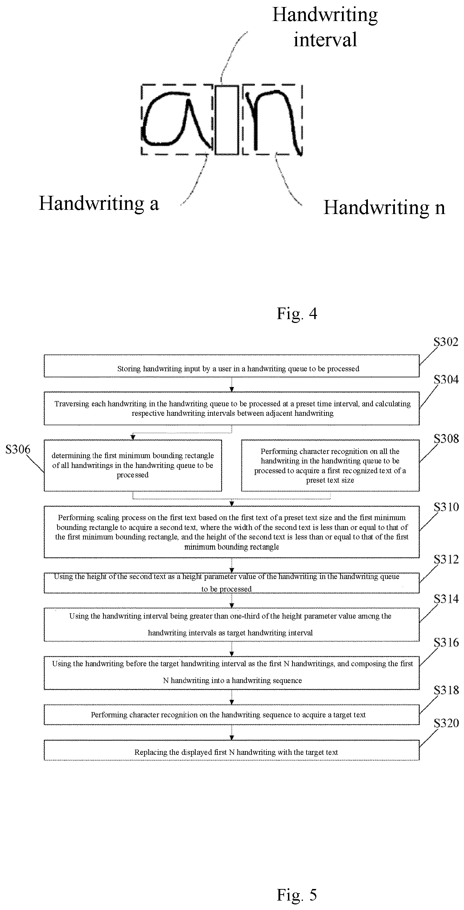

Referring to Fig. 4, Fig. 4 is a schematic diagram showing an example of determining a handwriting height parameter value according to an embodiment of the present disclosure. As shown in Fig. 4, "Welcome" is the handwriting of the user on the display screen, the dotted line is the minimum bounding rectangle of the handwriting displayed on the display screen, and the height of the minimum bounding rectangle is used as the height parameter value.

Optionally, the obtaining a height parameter value of each handwriting in the queue to be processed may be: making the minimum bounding rectangle corresponding to each handwriting in the queue to be processed, and using the average height value of each minimum bounding rectangle as the height parameter value of the handwriting in the queue to be processed.

Optionally, considering the aesthetics of the handwriting, the embodiment of the present disclosure may further preset the ratio of height and width for the target text so that the target text acquired by recognizing the handwriting is displayed on the display screen in the most aesthetically pleasing form. The target handwriting interval may also be greater than one-third of the height of the recognized target text.

Additionally, after calculating the handwriting interval between each adjacent handwriting in the queue to be processed, a first minimum bounding rectangle of all handwriting in the queue to be processed is made, character recognition is performed on all handwriting in the queue to be processed to acquire a first recognized text of a preset text size, and the first text of the preset text size proportionally is scaled based on the first minimum bounding rectangle to acquire a second text after scaling, where the width of the second text is smaller than that of the minimum bounding rectangle, and the height of the second text is smaller than that of the minimum bounding rectangle, and the height of the second text is used as the height parameter value of the handwriting in the queue to be processed, and the handwriting interval among handwriting interval that is greater than one-third of the height parameter value is used as the target handwriting interval, and the handwriting before the target handwriting interval is used as a handwriting sequence consisting of the first N handwriting. The preset text size is a text size with a preset aspect ratio that is more aesthetically pleasing, and displaying the target text with a text size having the same aspect ratio as the preset text size can make the target text most aesthetically pleasing.

S208, performing character recognition on the handwriting sequence to obtain a target text.

Additionally, after determining a handwriting sequence consisting of the first N handwriting in the handwriting queue to be processed, character recognition is performed on all handwriting in the handwriting sequence to acquire the target text.

**In** an embodiment, when the interactive device performs character recognition on a handwriting sequence to acquire a target text, it may perform the following steps: performing character recognition on the handwriting sequence to acquire a second recognized text of a preset text size, and determining a second minimum bounding rectangle of the handwriting sequence, and performing scaling process on the second recognized text based on the preset text size and the second minimum bounding rectangle to acquire the target text.

The preset text size is a text size with a preset aspect ratio that is more aesthetically pleasing, and displaying the target text with a text size having the same aspect ratio as the preset text size can make the target text more aesthetically pleasing. The second minimum bounding rectangle is the minimum bounding rectangle of all handwriting in the handwriting sequence when displayed on the display screen. Additionally, after recognizing the second recognized text of the preset text size, if the second recognized text of the preset text size cannot be displayed in the second minimum bounding rectangle corresponding to the handwriting sequence, or the width of the recognized text of the second recognized text of the preset text size is smaller than the width value of the second minimum bounding rectangle and the height of the second recognized text is smaller than the height value of the second minimum bounding rectangle, the second scaling factor is calculated based on the second recognized text of the preset text size and the second minimum bounding rectangle, and scaling process is performed on the second recognized text based on the second scaling factor to acquire the target text.

S210, replacing the displayed first N handwriting with the target text.

Additionally, during the writing process of the user, the user handwriting will be synchronously displayed on the display screen. After recognizing the first N handwriting to acquire the target text, the first N handwriting displayed on the display screen are replaced with the target text.

Optionally, the target text may be a target text of a preset text size, the preset text size is a text size with a preset aspect ratio that is more aesthetically pleasing, and displaying the target text with a text size having the same aspect ratio as the preset text size may make the target text more aesthetically pleasing.

It may be understood that when a user writes on a display screen, the size of the handwriting is largely the size that the user wants the target text to be displayed on the display screen. Therefore, when the region occupied by the user handwriting on the display screen is smaller than the preset text size, the target text of the preset text size needs to be scaled proportionally to acquire a target text with the same aspect ratio as the preset text size and a size smaller than the user handwriting.

In an embodiment of the present disclosure, during the process of a user handwriting, the handwriting input by the user is stored in a handwriting queue to be processed, and each handwriting in the handwriting queue to be processed is traversed at a preset time interval, and the handwriting intervals between adjacent handwriting are calculated, based on the calculated handwriting intervals, a handwriting sequence consisting of the first N handwriting is determined, and then character recognition is performed on the handwriting sequence to acquire a target text, and the handwriting sequence in the handwriting queue to be processed is deleted, and finally, the first N handwriting on the display screen are replaced with the target text, which realizes automatic recognition of the user handwriting during the user writing process and displaying the recognized text, without manually selecting the recognized text by the user during the process, thereby ensuring the writing continuity of the user.

Referring to Fig. 5, Fig. 5 is a flowchart of a text conversion method according to an embodiment of the present disclosure. As shown in Fig. 5, the text conversion method may include the following steps.

S302, storing handwriting input by a user in a handwriting queue to be processed.

Additionally, for step S302, reference is made to the detailed description of step S 102 in another embodiment, which will not be repeated here.

S304, traversing each handwriting in the handwriting queue to be processed at a preset time interval, and calculating respective handwriting intervals between adjacent handwriting.

Additionally, for step S304, reference is made to the detailed description of step S204 in another embodiment, which will not be repeated here.

S306, determining the first minimum bounding rectangle of all handwriting in the handwriting queue to be processed.

Additionally, each time of traversing each handwriting in the handwriting queue to be processed at a preset time interval, and calculating respective handwriting intervals between adjacent handwriting, the first minimum bounding rectangle of all handwriting displayed on the display screen is made to determine the size of the display region occupied by the handwriting on the display screen.

S308, performing character recognition on all handwriting in the handwriting queue to be processed to acquire a first recognized text of a preset text size.

Additionally, character recognition is performed on all handwriting in the handwriting queue to be processed and displayed on the display screen to acquire a first recognized text of a preset text size.

The preset text size is a preset text size with a more aesthetically pleasing aspect ratio, and displaying the target text with a text size having the same aspect ratio as the preset text size can make the target text display more aesthetically pleasing.

In the process of character recognition of handwriting, the default size of the text after each character recognition is the preset size.

For English or similar texts, they may be typeset using four lines and three grids when displayed on a computer. Therefore, in the embodiment of the present disclosure, the preset size of the text after character recognition is the size occupied by typeset text using four lines and three grids.

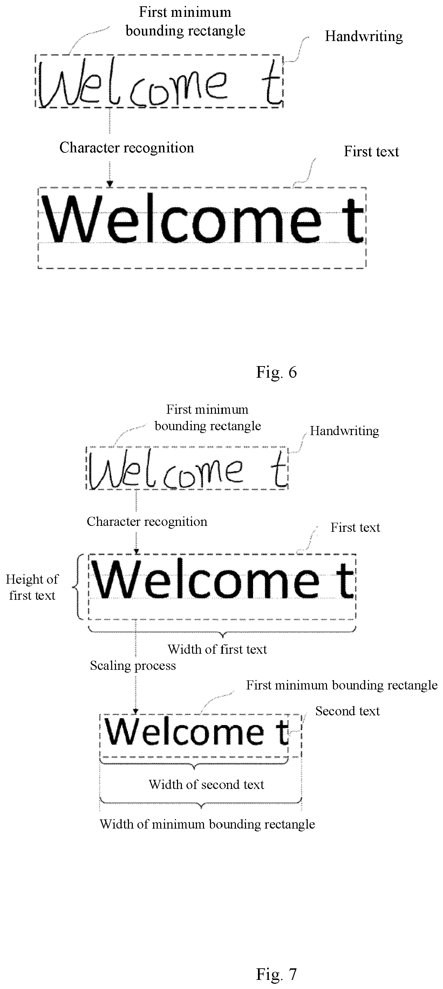

Please refer to Fig. 6, Fig. 6 is a schematic diagram showing an example of a first text according to an embodiment of the present disclosure. As shown in Fig. 6, the handwriting shown is the handwriting after being written by the user and displayed on the display screen. The first text shown is a text of a preset text size acquired after recognizing the handwriting displayed on the display screen. The size of the first text is displayed as a dotted box outside the first text in the figure. The size represented by the dotted box is the size required for typeseting the first text in four lines and three grids. The width of the dotted line box is the width of the first text corresponding to the first text of the preset text size, and the height of the dotted line box is the height of the first text corresponding to the first text of the preset text size.

S310, performing scaling process on the first text based on the first text of a preset text size and the first minimum bounding rectangle to acquire a second text, where the width of the second text is less than or equal to that of the first minimum bounding rectangle, and the height of the second text is less than or equal to that of the first minimum bounding rectangle.

It may be understood that when a user writes on a display screen, the size of the region where the handwriting is displayed on the display screen largely corresponds to the size of the region where the user expects the target text to be displayed after the handwriting is converted into text.

In addition, in order to ensure the aesthetics of the target text after text conversion and the uniformity of the target text after each text conversion, after each character recognition, the size of the text acquired after character recognition defaults to a preset size.

The size of the first text after character recognition is performed on all handwriting in the handwriting queue to be processed is the preset size.

In an embodiment,
in a first case, after character recognition, if the height of the first text of the first text of the preset text size is smaller than the height of the first minimum bounding rectangle, and the first text width of the first text of the preset text size is smaller than the width of the first minimum bounding rectangle, it indicates that the region occupied by the first text of the preset text size after character recognition when displayed on the display screen is smaller than the region size of the first minimum bounding rectangle.

In a second case, after character recognition, if the height of the first text of the first text of the preset text size is greater than the height of the first minimum bounding rectangle, and the first text width of the first text of the preset text size is greater than the width of the first minimum bounding rectangle, it indicates that the region occupied by the first text of the preset text size after character recognition when displayed on the display screen is greater than the region size of the first minimum bounding rectangle.

The above two cases both indicate that the size of the first text of the preset text size after character recognition does not meet the display size expected by the user when writing, it is necessary to perform scaling process on the first text of the preset text size to acquire the second text. The width of the second text is less than or equal to the width of the first minimum bounding rectangle, and the height of the second text is less than or equal to the height of the first minimum bounding rectangle.

**In** an embodiment, performing scaling process on the first text of the preset text size to acquire the second text may include the following steps:
if a ratio of the width of the first text to the height of the first text is greater than or equal to the ratio of the width of the minimum bounding rectangle to the height of the minimum bounding rectangle, then using the ratio of the width of the first text to the width of the minimum bounding rectangle as the first scaling factor; if the ratio of the width of the first text to the height of the first text is less than the ratio of the width of the minimum bounding rectangle to the height of the minimum bounding rectangle, then using the ratio of the height of the first text to the height of the minimum bounding rectangle as the first scaling factor; and performing scaling process on the first text based on the first scaling factor to acquire the second text.

Additionally, if the ratio of the width of the first text to the height of the first text is greater than or equal to the ratio of the width of the first minimum bounding rectangle to the height of the first minimum bounding rectangle, then the first text is scaled based on the ratio of the width of the first text to the width of the first minimum bounding rectangle, and a second text with a maximum size and a width and a height that do not exceed the first minimum bounding rectangle may be acquired; if the ratio of the width of the first text to the height of the first text is less than the ratio of the width of the first minimum bounding rectangle to the height of the first minimum bounding rectangle, then the first text is scaled based on the ratio of the height of the first text to the height of the first minimum bounding rectangle, and a second text with a maximum size and a width and a height that do not exceed the first minimum bounding rectangle may be acquired.

It should be noted that the scaling process may be either a reduction process or an enlargement process. If the relationship between the first text of the preset text size and the first minimum bounding rectangle is the first case mentioned above, and the first scaling factor calculated based on the above method is greater than 1, the first text of the preset text size is enlarged based on the first scaling factor to acquire the second text. If the relationship between the first text of the preset text size and the first minimum bounding rectangle is the second case mentioned above, and the first scaling factor calculated based on the above method is less than 1, the first text of the preset text size is reduced based on the first scaling factor to acquire the second text.

Referring to Fig. 7, Fig. 7 is a schematic diagram showing an example of a scaling process according to an embodiment of the present disclosure. As shown in Fig. 7, the first text shown is a text of a preset text size acquired after recognizing the handwriting displayed on the display screen. The size of the first text is the preset text size, and the height of the first text and the first text width of the first text of the preset text size are shown in the figure. In the example shown in Fig. 7, after calculation, the ratio of the width of the first text to the height of the first text is smaller than the ratio of the width of the first minimum bounding rectangle to the height of the first minimum bounding rectangle. Therefore, the first text is scaled based on the ratio of the height of the first text to the height of the first minimum bounding rectangle, and the second text as shown in the figure is acquired. The height dimension of the second text is equal to the height of the minimum bounding rectangle, and the width dimension of the second text is smaller than the width of the minimum bounding rectangle. The second text has the same aspect ratio as the first text and does not exceed the original display range of the handwriting.

S312, using the height of the second text as a height parameter value of the handwriting in the handwriting queue to be processed.

Additionally, the second text is acquired by performing scaling process on the first text based on a preset text size and a minimum bounding rectangle, and the height value of the second text is used as the height parameter value of the handwriting in the handwriting queue to be processed, so as to determine the target handwriting interval among handwriting intervals based on the height value of the second text.

S314, using the handwriting intervals greater than one-third of the height parameter value among the handwriting intervals as target handwriting intervals.

Additionally, the handwriting interval between adjacent handwriting in the queue to be processed that is greater than one-third of the height parameter value is used as the target handwriting interval.

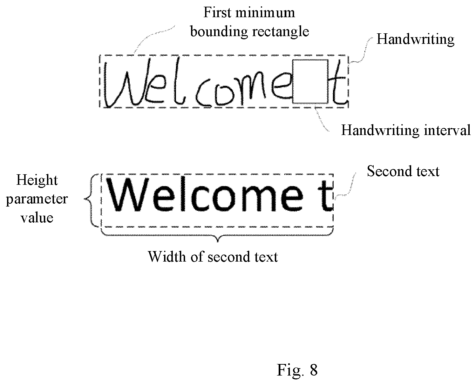

Referring to Fig. 8, Fig. 8 is a schematic diagram showing an example of a target handwriting interval according to an embodiment of the present disclosure. As shown in Fig. 8, the height value of the second text is used as the height parameter value, and it is calculated that the handwriting interval between the handwriting of the letter "e" and the handwriting of the letter "t" in the handwriting is greater than one-third of the height parameter value, then, the handwriting interval is used as the target handwriting interval, and all handwriting of "Welcome" before the handwriting interval are used as the handwriting sequence consisting of the first N handwriting.

S316, using the handwriting before the target handwriting interval as the first N handwriting, and composing the first N handwriting into a handwriting sequence.

Additionally, the handwriting before the target handwriting interval in the handwriting queue to be processed is used as the handwriting sequence.

Optionally, if the interactive device recognizes that each handwriting interval includes multiple target handwriting intervals, the handwriting before the last target interval is used as the handwriting sequence consisting of the first N handwriting.

It may be understood that when it is determined that each handwriting interval includes multiple target handwriting intervals, it indicates that the handwriting in the handwriting queue to be processed includes multiple complete words, and the last target handwriting interval is the handwriting interval between the last complete word and the subsequent unfinished word in the handwriting. The handwriting before the last target interval is used as a handwriting sequence consisting of the first N handwriting, that is, the handwriting sequence includes multiple complete words.

All the written handwriting in the handwriting sequence may include one or more complete words.

S318, performing character recognition on the handwriting sequence to acquire a target text.

Additionally, after determining the handwriting sequence consisting of the first N handwriting, character recognition is performed on the first N handwriting in the determined handwriting sequence to acquire the target text corresponding to the first N handwriting in the handwriting sequence.

Optionally, if the handwriting sequence is a handwriting sequence consisting of the read first N handwriting for the first time in the handwriting queue to be processed. Then step S318 may include:

S3181, performing character recognition on the handwriting sequence to acquire a second recognized text of a preset text size, and determining a second minimum bounding rectangle of the handwriting sequence.

Additionally, after determining the handwriting sequence consisting of the first N handwriting, character recognition is performed on the first N handwriting in the determined handwriting sequence to acquire a second recognized text of a preset text size after character recognition, and the second minimum bounding rectangle of the first N handwriting in the handwriting sequence when displayed on the display screen is determined.

It should be noted that the preset text size is a preset default text size after character recognition, and after each character recognition, a second recognized text of the preset text size is acquired.

It is understandable that the handwriting written by the user on the display screen is irregular and of varying sizes. Through character recognition, a second recognized text of a preset text size is acquired, and the irregular handwriting of varying sizes is converted into a regular second recognized text, which is more aesthetically pleasing.

S3182, performing scaling process on the second recognized text based on the second recognized text of the preset text size and the second minimum bounding rectangle to acquire the target text.

Additionally, after character recognition is performed on the handwriting in the handwriting sequence to acquire a second recognized text of a preset text size, a height and width comparison is performed between the second recognized text of the preset text size and the second minimum bounding rectangle of the first N handwriting when displayed on the display screen, a second scaling factor is calculated, and the second recognized text of the preset text size is scaled based on the second scaling factor to acquire the target text.

The second recognized text of the preset text size includes a height of the recognized text and a width of the recognized text.

Further, the calculating a second scaling factor may be: if the ratio of the width of the recognized text to the height of the recognized text is greater than or equal to the ratio of the width of the second minimum bounding rectangle to the height of the second minimum bounding rectangle, then performing scaling process on the recognized text based on the ratio of the width of the recognized text to the width of the second minimum bounding rectangle, and acquiring a target text with a maximum size and a width and a height that do not exceed the second minimum bounding rectangle; if the ratio of the width of the recognized text to the height of the recognized text is less than the ratio of the width of the second minimum bounding rectangle to the height of the second minimum bounding rectangle, then performing scaling process on the second recognized text based on the ratio of the height of the recognized text to the height of the second minimum bounding rectangle, and acquiring a target text with a maximum size and a width and a height that do not exceed the second minimum bounding rectangle.

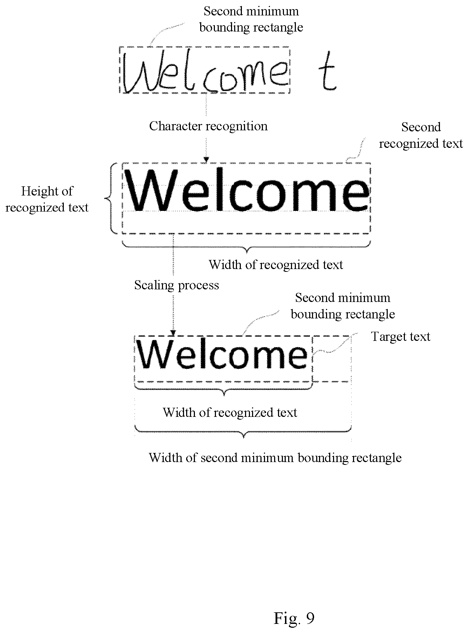

Referring to Fig. 9, Fig. 9 is a schematic diagram of an example of a scaling process according to an embodiment of the present disclosure. As shown in Fig. 7, the second recognized text is a text of a preset text size acquired after recognizing a handwriting sequence consisting of the first N written handwriting. The size of the second recognized text is the preset text size, and the recognized text height and recognized text width of the second recognized text of the preset text size are shown in the figure. In the example shown in Fig. 7, after calculation, the ratio of the width of the recognized text to the height of the recognized text is smaller than the ratio of the width of the second minimum bounding rectangle to the height of the first minimum bounding rectangle. Therefore, the second recognized text is scaled based on the ratio of the height of the recognized text to the height of the second minimum bounding rectangle, and the target text as shown in the figure is acquired. The height dimension of the target text is equal to the height of the minimum bounding rectangle, and the width dimension of the target text is smaller than the width of the minimum bounding rectangle. The target text and the second recognized text have the same aspect ratio and do not exceed the original display range of the handwriting.

Optionally, if the handwriting sequence is a handwriting sequence consisting of the first N handwriting that are not read for the first time in the handwriting queue to be processed. Then step S318 may include:
S3183, performing character recognition on the handwriting sequence to acquire a second recognized text of a preset text size;
S3184: performing scaling process on the second recognized text based on the second scaling factor to acquire a target text.

Additionally, after performing character recognition on the handwriting in the handwriting sequence to acquire a second recognized text of a preset text size, if the handwriting sequence is not a handwriting sequence consisting of the read first N handwriting for the first time, the second recognized text is scaled based on a second scaling factor calculated based on the handwriting sequence consisting of the read first N handwriting for the first time to acquire a target text.

It may be understood that during the user writing process, after the first word character written by the user is recognized to acquire the target text for display, the size of the target text corresponding to the user first word is the target text of the preset text size proportionally scaled by the second scaling factor. In order to keep the size of the words written by the user later consistent with the size of the previously displayed words after being recognized as target text, after the first word is determined, the handwriting sequence is read and recognized to acquire the second recognized text of the preset text size, and the second scaling factor is used to scale the recognized text to keep the word display consistent.

S320, replacing the displayed first N handwriting with the target text.

If the handwriting sequence is a handwriting sequence consisting of the read first N handwriting for the first time in the handwriting queue to be processed. After character recognition is performed on the handwriting sequence and the target text is acquired, the first N handwriting displayed on the display screen are deleted, and the target text is displayed at an upper left corner position of the second minimum bounding rectangle corresponding to the first N handwriting.

If the handwriting sequence is a handwriting sequence consisting of the first N handwriting that are not read for the first time in the handwriting queue to be processed. After character recognition is performed on the handwriting sequence and the target text is acquired, the first N handwriting displayed on the display screen are erased, and the target text is displayed on the right side of the historical target text displayed on the display screen. The historical target text is the target text after character recognition is performed on the handwriting sequence acquired by the last reading.

It should be noted that during the user writing process, the handwriting sequence consisting of the read first N handwriting for the first time in the handwriting queue to be processed is generally the first word written by the user. Character recognition is performed on the handwriting sequence corresponding to the first word to acquire a second recognized text of a preset text size, and the second scaling factor is calculated and scaled to acquire the target text corresponding to the first word. The target text corresponding to the first word is displayed in an upper left corner of the minimum bounding rectangle of the handwriting corresponding to the first word. The target text corresponding to each non-first word recognized during the subsequent user writing process is displayed after the target text displayed last, and is aligned with the target text displayed last.

In an embodiment of the present disclosure, during the process of handwriting by a user, the handwriting input by the user is stored in a handwriting queue to be processed, each handwriting in the handwriting queue to be processed is traversed at a preset time interval, and respective handwriting intervals between adjacent handwriting are calculated. Based on the user writing habits and the aesthetics of the target text displayed after recognition, a preset text size is set for the recognized text, and the recognized text is scaled proportionally based on the first minimum bounding rectangle of the handwriting, and the height of the scaled second text is used as the height parameter value, and the handwriting interval among handwriting intervals that is greater than one-third of the height parameter value are used as the target handwriting interval, the handwriting before the target handwriting interval is used as the handwriting sequence consisting of the first N handwriting, and then the handwriting sequence is subjected to character recognition to acquire the second recognized text, and the second recognized text is scaled in proportion based on the second minimum bounding rectangle to ensure the display aesthetics of the target text after recognition, and the handwriting sequence in the handwriting queue to be processed is deleted, and finally the first N handwriting on the display screen are replaced with the target text, so that the user handwriting is automatically recognized and the recognized text is displayed during the user writing process. The user does not need to manually select the recognized text during the process, so as to ensure the writing continuity of the user.

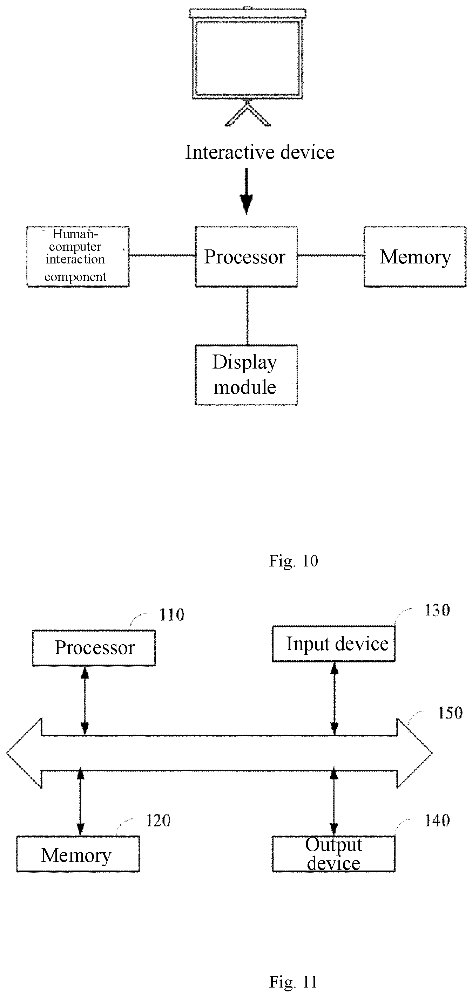

Referring to Fig. 10, Fig. 10 is a schematic diagram of a structure of an interactive device according to an embodiment of the present disclosure, the interactive device includes a human-computer interaction component, a display module, a memory, and a processor, where the processor is connected to the memory, the human-computer interaction component, and the display module, respectively, and the display module includes a display screen;
the human-computer interaction component is configured to collect handwriting input by the user on a display screen of the interactive device;
the processor is configured to store the handwriting in a handwriting queue to be processed in the memory, read first N handwriting in the handwriting queue to be processed from the memory at a preset interval, compose a handwriting sequence with the read first N handwriting, perform character recognition on the handwriting sequence to acquire a target text, and control the display module to replace the first N handwriting displayed on the display screen with the target text for display, where the N is a positive integer greater than or equal to 1.

Additionally, the human-computer interaction component collects the handwriting of the user on the display screen of the interactive device in real time, and stores the handwriting in a handwriting queue to be processed in the memory through the processor. During the user writing process, the processor reads the first N handwriting from the memory at a preset time interval. The first N handwriting are all handwriting corresponding to a complete word or all handwriting corresponding to multiple complete words.

After reading the handwriting sequence corresponding to the first N handwriting, OCR character recognition is performed on all handwriting in the handwriting sequence to acquire the target text corresponding to the first N handwriting, and the display module is controlled to replace the first N handwriting displayed on the display screen with the recognized target text, and the target text is displayed on the display screen.

Optionally, the human-computer interaction component includes a touch component and/or a non-touch component.

It may be understood that the touch component is a component for touch detection arranged in front of the display screen, which may detect and record the position coordinates of the user touch when the user touches the display screen, and send the position coordinates to the processor. The non-touch component may be an external device such as a mouse or a remote controller. The external device controls the movement of the cursor in the display screen by establishing a wired or wireless connection with the interactive device, records the position coordinates of the cursor movement in the display screen, and sends the position coordinates to the processor.

In an embodiment, when a user performs a writing operation on a display screen, the human-computer interaction component collects the handwriting of the user and records it as a position coordinate set, which represents the handwriting of the user. If the user writes by touch, the touch component will monitor and record the position coordinate set of the user touch in real time. The position coordinate set represents the handwriting of the user touch writing. If the user writes by controlling the cursor with a mouse, the non-touch component will monitor and record the position coordinate set of the cursor in real time. The position coordinate set represents the handwriting of the user writing with a mouse.

Optionally, when the processor is used to read the first N handwriting in the handwriting queue to be processed at a preset time interval, it is configured to:
traverse each handwriting in the handwriting queue to be processed at a preset time interval, and calculating respective handwriting intervals between adjacent handwriting; and
determine the first N handwriting in the handwriting queue to be processed based on respective handwriting intervals.

Additionally, the processor reads all handwriting in the queue to be processed from the memory at a preset time interval, calculates the handwriting intervals between adjacent writings in the queue to be processed, and determines the first N writings in the queue to be processed based on the handwriting intervals between adjacent writings in the queue to be processed.

It is understandable that when the user writes manually, the handwriting interval left when writing each complete word is greater than the handwriting interval between adjacent letters in a complete word. Based on this feature, the first N handwriting corresponding to one or more complete words may be determined in the handwriting queue to be processed based on the handwriting interval.

Optionally, when the processor is configured to determine the first N handwriting in the handwriting queue to be processed based on each of the handwriting intervals, it is configured to:
determine a target handwriting interval being greater than a preset threshold value among the handwriting intervals; and
use the handwriting before the target handwriting interval as the first N handwriting.

Additionally, the target handwriting interval is the handwriting interval between the last letter of a complete word and the first letter of the next word. The processor determines the target handwriting interval among handwriting intervals by means of a preset threshold value, and the handwriting before the target handwriting interval is used as the handwriting sequence corresponding to the first N handwriting.

Optionally, when the processor is configured to determine a target handwriting interval being greater than a preset threshold value among the handwriting intervals, the processor is configured to:
obtain a height parameter value of each handwriting in the handwriting queue to be processed; and
use the handwriting interval that is greater than one-third of the height parameter value among the handwriting intervals as the target handwriting interval.

Additionally, by making the minimum bounding rectangle of all handwriting in the handwriting queue to be processed, and then using the height of the minimum bounding rectangle as the height parameter value of the handwriting in the handwriting queue to be processed, the handwriting interval among handwriting intervals that is greater than one-third of the height parameter value is used as the target handwriting interval.

Optionally, if the target handwriting interval includes multiple handwriting intervals, when the processor is configured to use the handwriting before the target handwriting interval as the first N handwriting, it is configured to:
use the handwriting before the last target handwriting interval among target handwriting intervals as the first N handwriting.

Additionally, when it is determined that each handwriting interval includes multiple target handwriting intervals, it indicates that the handwriting in the handwriting queue to be processed includes multiple complete words, and the last target handwriting interval is the handwriting interval between the last complete word and the subsequent unfinished word in the handwriting, the handwriting before the last target interval is used as a handwriting sequence consisting of the first N handwriting, that is, the handwriting sequence includes multiple complete words.

Optionally, if the target handwriting interval includes zero handwriting interval, the processor is configured to execute the step of traversing each handwriting in the handwriting queue to be processed at each preset time interval and calculating respective handwriting intervals between adjacent handwriting.

Optionally, when the processor is configured to obtain a height parameter value of the handwriting in the handwriting queue to be processed, it is configured to:
determine the first minimum bounding rectangle of all handwriting in the handwriting queue to be processed;
perform character recognition on all handwriting in the handwriting queue to be processed to acquire a first recognized text of a preset text size;
perform scaling process on the first text based on the first text of the preset text size and the first minimum bounding rectangle to acquire a second text, where the width of the second text is less than or equal to that of the first minimum bounding rectangle, and the height of the second text is less than or equal to that of the first minimum bounding rectangle; and
use the height of the second text as the height parameter value of the handwriting in the handwriting queue to be processed.

Optionally, the first text of the preset text size includes a width of the first text and a height of the first text, and when the processor is configured to perform scaling process on the first text based on the first text of the preset text size and the first minimum bounding rectangle to acquire the second text, it is configured to:
if the ratio of the width of the first text to the height of the first text is greater than or equal to the ratio of the width of the first minimum bounding rectangle to the height of the first minimum bounding rectangle, then using the ratio of the width of the first text to the width of the first minimum bounding rectangle as a first scaling factor;
if the ratio of the width of the first text to the height of the first text is smaller than the ratio of the width of the first minimum bounding rectangle to the height of the first minimum bounding rectangle, then using the ratio of the height of the first text to the height of the first minimum bounding rectangle as a first scaling factor; and
performing scaling process on the first text based on the first scaling factor to obtain a second text.

Optionally, if the handwriting sequence is a handwriting sequence consisting of the read first N handwriting by the processor for the first time in the handwriting queue to be processed, when the processor is configured to perform character recognition on the handwriting sequence to acquire the target text, it is configured to:
perform character recognition on the handwriting sequence to acquire a second recognized text of a preset text size, and determine a second minimum bounding rectangle of the handwriting sequence; and
perform scaling process on the second recognized text based on the second recognized text of the preset text size and the second minimum bounding rectangle to acquire a target text.

Optionally, the second recognized text of the preset text size includes a width of the recognized text and a height of recognized text, and when the processor is configured to perform scaling process on the second recognized text based on the second recognized text of the preset text size and the second minimum bounding rectangle to acquire the target text, the processor is configured to:
if the ratio of the width of the recognized text to the height of the recognized text is greater than or equal to the ratio of the width of the second minimum bounding rectangle to the height of the second minimum bounding rectangle, then using the ratio of the width of the recognized text to the width of the second minimum bounding rectangle as a second scaling factor;
if the ratio of the width of the recognized text to the height of the recognized text is smaller than the ratio of the second minimum bounding rectangle width to the second minimum bounding rectangle height, then using the ratio of the height of the recognized text to the second minimum bounding rectangle height as the second scaling factor; and
perform scaling process on the second recognized text based on the second scaling factor to acquire a target text.

Optionally, when the processor controls the display module to replace the displayed first N handwriting with the target text, it is configured to:
erase the first N handwriting displayed on the display screen and display the target text at an upper left corner of the second minimum bounding rectangle on the display screen.

Optionally, the processor is further configured to:
delete the first N handwriting in the handwriting queue to be processed.

Optionally, if the handwriting sequence is a handwriting sequence consisting of the first N handwriting in the handwriting queue to be processed but not read for the first time, when the processor is configured to perform character recognition on the handwriting sequence to acquire the target text, it is configured to:
perform character recognition on the handwriting sequence to acquire a second recognized text of a preset text size; and
perform scaling process on the recognized text based on the second scaling factor to acquire a target text.

Optionally, when the processor controls the display module to replace the displayed first N handwriting with the target text, it is configured to:
erase the first N handwriting displayed on the display screen, and display the target text on the right side of the historical target text displayed on the display screen, where the historical target text is the target text after character recognition of the handwriting sequence obtained by reading last time.

In an embodiment of the present disclosure, during the process of a user handwriting, the handwriting input by the user is stored in a handwriting queue to be processed, each handwriting in the handwriting queue to be processed is traversed at a preset time interval, and respective handwriting intervals between adjacent handwriting are calculated, based on the user writing habits and the aesthetics of the target text displayed after recognition, a preset text size is set for the recognized text, and the recognized text is scaled proportionally based on the first minimum bounding rectangle of the handwriting, and the height of the scaled second text is used as the height parameter value, and the handwriting interval that is greater than one-third of the height parameter value among handwriting intervals is used as the target handwriting interval, and the handwriting before the target handwriting interval is used as a handwriting sequence consisting of the first N handwriting, and then character recognition is performed on the handwriting sequence to acquire a second recognized text, and the second recognized text is scaled proportionally based on the second minimum bounding rectangle to ensure the display aesthetics of the target text after recognition, and the handwriting sequence in the handwriting queue to be processed is deleted, and finally, the first N handwriting on the display screen are replaced with the target text, which realizes automatic recognition of the user handwriting during the user writing process and displaying the recognized text, without manually selecting the recognized text by the user during the process, thereby ensuring the writing continuity of the user.

It should be noted that, when the interactive device according to the above embodiment executes the text conversion method, only the division of the above functional modules is used as an example. In actual applications, the above functions may be assigned to different functional modules as needed, that is, the internal structure of the device may be divided into different functional modules to complete all or part of the functions described above. In addition, the interactive device and the text conversion method embodiment according to the above embodiment belong to the same concept, and the implementation process thereof is detailed in the method embodiment, which will not be repeated here.

The serial numbers of the above-mentioned embodiments of the present disclosure are for description only and do not represent the advantages or disadvantages of the embodiments.

According to an embodiment of the present disclosure, a computer storage medium is further provided, the computer storage medium may store multiple instructions, and the instructions are suitable for being loaded by a processor and executing the text conversion method of the embodiment shown in Figs. 1 to 9 above. The specific execution process may be found in the specific description of the embodiment shown in Figs. 1 to 9, which will not be repeated here.

The present disclosure further provides a computer program product, the computer program product stores at least one instruction, and the at least one instruction is loaded by the processor and executes the text conversion method of the embodiment shown in Figs. 1 to 9 above. The specific execution process may be found in the specific description of the embodiment shown in Figs. 1 to 9, which will not be repeated here.

Referring to Fig. 11, Fig. 11 is a block diagram of a structure of an electronic device according to an embodiment of the present disclosure. The electronic device in the present disclosure may include one or more of the following components: a processor 110, a memory 120, an input device 130, an output device 140, and a bus 150. The processor 110, the memory 120, the input device 130, and the output device 140 may be connected via a bus 150.

The processor 110 may include one or more processing cores. The processor 110 uses various interfaces and lines to connect various parts within the entire electronic device, and executes various functions of the terminal 100 and processes data by running or executing instructions, programs, code sets or instruction sets stored in the memory 120, and calling data stored in the memory 120. Optionally, the processor 110 may be implemented in at least one hardware form of Digital Signal Processing (DSP), Field-Programmable Gate Array (FPGA), and Programmable Logic Array (PLA). The processor 110 may integrate one or a combination of Central Processing Unit (CPU), Graphics Processing Unit (GPU), a modem, and the like. The CPU mainly processes the operating system, user pages and applications; the GPU is responsible for rendering and drawing display content; and the modem is used to handle wireless communications. It is understandable that the above-mentioned modem may not be integrated into the processor 110, but may be implemented separately through a communication chip.

The memory 120 may include Random Access Memory (RAM) or Read-Only Memory (ROM). Optionally, the memory 120 includes Non-Transitory Computer-Readable Storage Medium. The memory 120 may be used to store instructions, programs, codes, code sets, or instruction sets. The memory 120 may include a program storage region and a data storage region, where the program storage region may store instructions for implementing an operating system, instructions for implementing at least one function (such as a touch function, a sound playback function, an image playback function, etc.), instructions for implementing the above-mentioned various method embodiments, etc. The operating system may be Android system, including a system deeply developed based on Android system, IOS system developed by Apple, including a system deeply developed based on IOS system, or other systems.

The memory 120 may be divided into an operating system space and a user space. The operating system runs in the operating system space, and native and third-party applications run in the user space. **In** order to ensure that different third-party applications may achieve good operating results, the operating system allocates corresponding system resources to different third-party applications. However, different application scenarios in the same third-party application may have different requirements for system resources. For example, in the local resource loading scenario, the third-party application has higher requirements for disk reading speed; in the animation rendering scenario, the third-party application has higher requirements for GPU performance. However, the operating system and third-party applications are independent of each other, and the operating system often cannot perceive the current application scenario of the third-party application in a timely manner, resulting in the operating system being unable to perform targeted system resource adaptation according to the specific application scenario of the third-party application.

In order for the operating system to distinguish the specific application scenarios of third-party applications, it is necessary to open up data communication between third-party applications and the operating system so that the operating system can obtain the current scenario information of third-party applications at any time, and then perform targeted system resource adaptation based on the current scenario.

The input device 130 is used to receive input instructions or data, and the input device 130 includes but is not limited to a keyboard, a mouse, a camera, a microphone or a touch device. The output device 140 is used to output instructions or data, and the output device 140 includes but is not limited to a display device and a speaker. In one example, the input device 130 and the output device 140 may be combined, and the input device 130 and the output device 140 are touch display screens.

The touch display screen may be designed to be a full screen, a curved screen or a special-shaped screen. The touch display screen may also be designed as a combination of a full screen and a curved screen, or a combination of a special-shaped screen and a curved screen, which is not limited in the embodiments of the present disclosure.

In addition, those skilled in the art will appreciate that the structure of the electronic device shown in the above figures does not constitute a limitation on the electronic device, and the electronic device may include more or fewer components than shown in the figures, or a combination of certain components, or a different arrangement of components. For example, the electronic device also includes components such as a radio frequency circuit, an input unit, a sensor, an audio circuit, a wireless fidelity (Wi-Fi) module, a power supply, and a Bluetooth module, which are not described in detail here.

In the electronic device shown in Fig. 11, the processor 110 may be configured to call a text conversion program stored in the memory 120 and execute the program to implement the text conversion method as described in the various method embodiments of the present disclosure.

In the embodiment of the present disclosure, during the process of a user handwriting, the handwriting input by the user is stored in a handwriting queue to be processed, and each handwriting in the handwriting queue to be processed is traversed at a preset time interval, and the handwriting intervals between adjacent handwriting are calculated, based on the calculated handwriting intervals, a handwriting sequence consisting of the first N handwriting is determined, and then character recognition is performed on the handwriting sequence to acquire a target text, and the handwriting sequence in the handwriting queue to be processed is deleted, and finally, the first N handwriting on the display screen are replaced with the target text, which realizes automatic recognition of the user handwriting during the user writing process and displaying the recognized text, without manually selecting the recognized text by the user during the process, thereby ensuring the writing continuity of the user.

Those skilled in the art can understand that all or part of the processes in the above-mentioned embodiment methods may be implemented by instructing related hardware through a computer program. The program may be stored in a computer-readable storage medium. When the program is executed, it may include the processes of the embodiments of the above-mentioned methods. The storage medium may be a magnetic disk, an optical disk, a read-only storage memory or a random access memory, etc.

The above disclosure is only the preferred embodiment of the present disclosure, which certainly cannot be used to limit the scope of rights of the present disclosure. Therefore, equivalent changes made according to the claims of the present disclosure are still within the scope covered by the present disclosure.

## Claims

1. A method for converting a text applied to an interactive device, **characterized by** comprising:
storing handwriting input by a user in a handwriting queue to be processed;
reading first N handwriting in the handwriting queue to be processed at a preset time interval, wherein the N is a positive integer greater than or equal to 1;
composing a handwriting sequence with the read first N handwriting;
performing character recognition on the handwriting sequence to acquire a target text; and
replacing the displayed first N handwriting with the target text for display.

2. The method of claim 1, wherein the reading first N handwriting in the handwriting queue to be processed at a preset time interval, wherein the N is a positive integer greater than or equal to 1 comprises:
traversing each handwriting in the handwriting queue to be processed at a preset time interval, and calculating respective handwriting intervals between adjacent handwriting; and
determining the first N handwriting in the handwriting queue to be processed based on respective handwriting intervals.

3. The method of claim 2, wherein the determining the first N handwriting in the handwriting queue to be processed based on respective handwriting intervals comprises:
determining a target handwriting interval being greater than a preset threshold value among the handwriting intervals; and
using the handwriting before the target handwriting interval as the first N handwriting.

4. The method of claim 3, wherein the determining a target handwriting interval being greater than a preset threshold value among the handwriting intervals comprises:
obtaining a height parameter value of each handwriting in the handwriting queue to be processed; and
using the handwriting interval that is greater than one-third of the height parameter value among the handwriting intervals as the target handwriting interval.

5. The method of claim 3, wherein in a case that the target handwriting interval comprises multiple handwriting intervals, the using the handwriting before the target handwriting interval as the first N handwriting comprises:
using the handwriting before the last target handwriting interval among target handwriting intervals as the first N handwriting.

6. The method of claim 3, wherein in a case that the target handwriting interval comprises zero handwriting interval, executing the step of traversing each handwriting in the handwriting queue to be processed at each preset time interval and calculating respective handwriting intervals between adjacent handwriting.

7. The method of claim 4, wherein the obtaining a height parameter value of the handwriting in the handwriting queue to be processed comprises:
determining a first minimum bounding rectangle of all handwriting in the handwriting queue to be processed;
performing character recognition on all handwriting in the handwriting queue to be processed, and obtaining a first recognized text of a preset text size;
performing scaling process on the first text based on the first text of the preset text size and the first minimum bounding rectangle to acquire a second text, wherein the width of the second text is smaller than that of the first minimum bounding rectangle, and the height of the second text is smaller than that of the first minimum bounding rectangle; and
using the height of the second text as the height parameter value of the handwriting in the handwriting queue to be processed.

8. The method of claim 7, wherein the first text of the preset text size comprises a width of the first text and a height of the first text, and the performing scaling process on the first text based on the first text of the preset text size and the first minimum bounding rectangle to acquire a second text comprises:
in a case that a ratio of the width of the first text to the height of the first text is greater than or equal to the ratio of the width of the first minimum bounding rectangle to the height of the minimum bounding rectangle, using the ratio of the width of the first text to the width of the first minimum bounding rectangle as a first scaling factor;
in a case that the ratio of the width of the first text to the height of the first text is less than the ratio of the width of the minimum bounding rectangle to the height of the minimum bounding rectangle, using the ratio of the height of the first text to the height of the first minimum bounding rectangle as the first scaling factor; and
performing scaling process on the first text based on the first scaling factor to acquire the second text.

9. The method of claim 1, wherein in a case that the handwriting sequence is a handwriting sequence consisting of the read first N handwriting for the first time in the handwriting queue to be processed, the performing character recognition on the handwriting sequence to acquire a target text comprises:
performing character recognition on the handwriting sequence to acquire a second recognized text of a preset text size, and determining a second minimum bounding rectangle of the handwriting sequence; and
performing scaling process on the recognized text based on the recognized text of the preset text size and the second minimum bounding rectangle to acquire the target text.

10. The method of claim 9, wherein the second recognized text of the preset text size comprises a width of recognized text and a height of the recognized text, the performing scaling process on the recognized text based on the second recognized text of the preset text size and the second minimum bounding rectangle to acquire the target text comprises:
in a case that a ratio of the width of the recognized text to the height of the recognized text is greater than or equal to the ratio of the width of the second minimum bounding rectangle to the height of the second minimum bounding rectangle, using the ratio of the width of the recognized text to the width of the second minimum bounding rectangle as a second scaling factor;
in a case that the ratio of the width of the recognized text to the height of the recognized text is less than the ratio of the width of the second minimum bounding rectangle to the height of the second minimum bounding rectangle, using the ratio of the height of the recognized text to the height of the second minimum bounding rectangle as the second scaling factor; and
performing scaling process on the second recognized text based on the second scaling factor to acquire the target text.

11. The method of claim 9, wherein the replacing the displayed first N handwriting with the target text for display comprises:
erasing the first N handwriting displayed on the display screen and displaying the target text at an upper left corner of the second minimum bounding rectangle on the display screen.

12. The method of claim 1, wherein the method further comprises:
deleting the first N handwriting in the handwriting queue to be processed.

13. The method of claim 10, wherein in a case that the handwriting sequence is a handwriting sequence consisting of the first N handwriting in the handwriting queue to be processed but not read for the first time, the performing character recognition on the handwriting sequence to acquire the target text comprises:
performing character recognition on the handwriting sequence to acquire a second recognized text of a preset text size; and
performing scaling process on the recognized text based on the second scaling factor to acquire a target text.

14. The method of claim 13, wherein the replacing the displayed first N handwriting with the target text comprises:
erasing the first N handwriting displayed on the display screen, and displaying the target text on the right side of the historical target text displayed on the display screen, wherein the historical target text is the target text after character recognition of the handwriting sequence obtained by reading last time.

15. An interactive device, **characterized by** comprising a human-computer interaction component, a display module, a memory, and a processor, wherein the processor is connected to the memory, the human-computer interaction component, and the display module, respectively, and the display module comprises a display screen;
the human-computer interaction component is configured to collect handwriting input by the user on a display screen of the interactive device;
the processor is configured to store the handwriting in a handwriting queue to be processed in the memory, read first N handwriting in the handwriting queue to be processed from the memory at a preset interval, compose a handwriting sequence with the read first N handwriting, perform character recognition on the handwriting sequence to acquire a target text, and control the display module to replace the first N handwriting displayed on the display screen with the target text for display, wherein the N is a positive integer greater than or equal to 1.

16. The interactive device of claim 15, wherein when the processor is configured to read first N handwriting in the handwriting queue to be processed from the memory at a preset interval, the processor is further configured to:
traverse each handwriting in the handwriting queue to be processed at each preset interval and calculate respective handwriting intervals between adjacent handwriting; and
determine the first N handwriting in the handwriting queue to be processed based on respective handwriting intervals.

17. The interactive device of claim 16, wherein when the processor is configured to determine the first N handwriting in the handwriting queue to be processed based on respective handwriting intervals, the processor is further configured to:
determine the handwriting interval among handwriting intervals that is greater than a preset threshold; and
use the handwriting before the target handwriting interval as the first N handwriting.

18. The interactive device of claim 17, wherein when the processor is configured to determine a target handwriting interval being greater than a preset threshold value among the handwriting intervals, the processor is further configured to:
obtain a height parameter value of each handwriting in the handwriting queue to be processed; and
use the handwriting interval that is greater than one-third of the height parameter value among the handwriting intervals as the target handwriting interval.

19. The interactive device of claim 17, wherein in a case that the target handwriting interval comprises multiple handwriting intervals, the processor is configured to use the handwriting before the target handwriting interval as the first N handwriting, the processor is further configured to:
use the handwriting before the last target handwriting interval among target handwriting intervals as the first N handwriting.

20. The interactive device of claim 17, wherein in a case that the target handwriting interval comprises zero handwriting interval, the processor is configured to traverse each handwriting in the handwriting queue to be processed at each preset time interval and calculate respective handwriting intervals between adjacent handwriting.

21. The interactive device of claim 18, wherein when the processor is configured to obtain a height parameter value of the handwriting in the handwriting queue to be processed, the processor is further configured to:
determine the first minimum bounding rectangle of all handwriting in the handwriting queue to be processed;
perform character recognition on all handwriting in the handwriting queue to be processed to acquire a first recognized text of a preset text size;
perform scaling process on the first text based on the first text of the preset text size and the first minimum bounding rectangle to acquire a second text, wherein the width of the second text is less than or equal to that of the first minimum bounding rectangle, and the height of the second text is less than or equal to that of the first minimum bounding rectangle; and
use the height of the second text as the height parameter value of the handwriting in the handwriting queue to be processed.

22. The interactive device of claim 21, wherein the first text of the preset text size comprises a width of the first text and a height of first text, and when the processor is configured to perform scaling process on the first text based on the first text of the preset text size and the first minimum bounding rectangle to acquire the second text, the processor is further configured to:
in a case that the ratio of the width of the first text to the height of the first text is greater than or equal to the ratio of the width of the first minimum bounding rectangle to the height of the first minimum bounding rectangle, use the ratio of the width of the first text to the width of the first minimum bounding rectangle as a first scaling factor;
in a case that the ratio of the width of the first text to the height of the first text is smaller than the ratio of the width of the first minimum bounding rectangle to the height of the first minimum bounding rectangle, use the ratio of the height of the first text to the height of the first minimum bounding rectangle as a first scaling factor; and
perform scaling process on the first text based on the first scaling factor to obtain a second text.

23. The interactive device of claim 15, wherein in a case that the handwriting sequence is a handwriting sequence consisting of the read first N handwriting by the processor for the first time in the handwriting queue to be processed, when the processor is configured to perform character recognition on the handwriting sequence to acquire the target text, the processor is further configured to:
perform character recognition on the handwriting sequence to acquire a second recognized text of a preset text size, and determine a second minimum bounding rectangle of the handwriting sequence; and
perform scaling process on the second recognized text based on the second recognized text of the preset text size and the second minimum bounding rectangle to acquire a target text.

24. The interactive device of claim 23, wherein the second recognized text of the preset text size comprises a width of the recognized text and a height of the recognized text, and when the processor is configured to perform scaling process on the second recognized text based on the second recognized text of the preset text size and the second minimum bounding rectangle to acquire the target text, the processor is further configured to:
in a case that the ratio of the width of the recognized text to the height of the recognized text is greater than or equal to the ratio of the width of the second minimum bounding rectangle to the height of the second minimum bounding rectangle, use the ratio of the width of the recognized text to the width of the second minimum bounding rectangle as a second scaling factor;
in a case that the ratio of the width of the recognized text to the height of the recognized text is smaller than the ratio of the width of the second minimum bounding rectangle to the height of the second minimum bounding rectangle, use the ratio of the height of the recognized text to the height of the second minimum bounding rectangle as the second scaling factor; and
perform scaling process on the second recognized text based on the second scaling factor to acquire a target text.

25. The interactive device of claim 23, wherein when the processor controls the display module to replace the first N handwriting displayed on the display screen with the target text, the processor is further configured to:
erase the first N handwriting displayed on the display screen and display the target text at an upper left corner of the second minimum bounding rectangle on the display screen.

26. The interactive device of claim 15, wherein the processor is further configured to:
delete the first N handwriting in the handwriting queue to be processed.

27. The interactive device of claim 24, wherein in a case that the handwriting sequence is a handwriting sequence consisting of the first N handwriting in the handwriting queue to be processed but not read for the first time, the processor is configured to perform character recognition on the handwriting sequence to acquire the target text, the processor is further configured to:
perform character recognition on the handwriting sequence to acquire a second recognized text of a preset text size; and
perform scaling process on the recognized text based on the second scaling factor to acquire a target text.

28. The interactive device of claim 27, wherein when the processor controls the display module to replace the first N handwriting displayed on the display screen with the target text, the processor is further configured to:
erase the first N handwriting displayed on the display screen, and display the target text on the right side of the historical target text displayed on the display screen, wherein the historical target text is the target text after character recognition of the handwriting sequence obtained by reading last time.

29. The interactive device of claim 15, wherein the human-computer interaction component comprises a touch component and/or a non-touch component.

30. A computer storage medium storing a plurality of instructions, **characterized in that** the instructions, when executed by processor, perform the method of one of claims 1-14.
